# EUROPEAN PATENT SPECIFICATION

(11) **EP 0 797 921 B1**
(45) Date of publication and mention of the grant of the patent: **04.06.2003**
(21) Application number: 97105141.2
(22) Date of filing: 26.03.1997
(51) Int. Cl.: A23D 9/00, C11C 3/10

(54) **Frying fat and oil**
Back- und Bratfett und Bratöl
Matière grasse et huile de friture

(30) Priority: 26.03.1996 JP 9597296
(43) Date of publication of application: 01.10.1997
(73) Proprietor: SHOWA SANGYO Co., Ltd., Tokyo, 101 (JP)
(72) Inventor: Kawabata, Toshitern, 2-20.2, Hinode, Funabashi-shi, Chiba (JP); Yagi, Takashi, 2-20.2, Hinode, Funabashi-shi, Chiba (JP); Uchida, Chie, 2-20.2, Hinode, Funabashi-shi, Chiba (JP)
(74) Representative: Winter, Brandl, Fürniss, Hübner, Röss, Kaiser, Polte Partnerschaft

(56) References cited:
- EP-A- 0 579 928
- US-A- 5 061 498
- PATENT ABSTRACTS OF JAPAN vol. 095, no. 001, 28 February 1995 -& JP 06 287593 A (SNOW BRAND MILK PROD CO LTD), 11 October 1994
- PATENT ABSTRACTS OF JAPAN vol. 014, no. 526 (C-0779), 19 November 1990 -& JP 02 219581 A (AJINOMOTO CO INC), 3 September 1990
- DATABASE WPI Section Ch, Week 8041 Derwent Publications Ltd., London, GB; Class D11, AN 80-72245C XP002089448 -& JP 55 110195 A (NISSHIN OIL MILLS LTD) , 25 August 1980
- DATABASE WPI Section Ch, Week 9112 Derwent Publications Ltd., London, GB; Class D13, AN 91-084320 XP002089449 -& JP 03 030647 A (KYOWA HAKKO KOGYO KK) , 8 February 1991

## Description

### FIELD OF THE INVENTION

The present invention relates to palm oil-based frying fat and oil which has an improved non-dripping property while retaining favorable characteristics of palm oil, i.e., high stability against oxidation and a good taste.

### BACKGROUND OF THE INVENTION

Frying fat and oil must have heat stability and oxidation stability. It is additionally required to have a good taste and be reasonably priced. For some uses it is also desired for frying fat and oil to have a non-dripping property (the property of not dripping from a deep-fried food), a property of preventing sugar dusted over doughnuts from melting and becoming sticky, and satisfactory handling properties. Foods fried in oil having high oxidation stability keep better and are accompanied with a reduced amount of waste oil. A frying fat and oil having a plain taste lets the taste of the food material itself remain strong. Palm oil having high oxidation stability has been frequently used as frying fat and oil. However, palm oil has the disadvantage of dripping from a fried food, i.e., retarded solidification by crystallization due to POP (triglyceride having a palmitic acid residue at the 1,3-positions and an oleic acid residue at the 2-position). The retarded solidification by crystallization grows crystals large, and thus palm oil is separated into solid and liquid. Therefore, when it is used, heating and dissolving are required, and a problem of handling arises.

Dripping of oil seems to be caused by (1) a low melting point and too low a solid fat content or (2) too low a solidification rate in spite of a sufficient solid fat content. The dripping of palm oil in spite of its relatively high melting point appears to be caused by reason (2). The fact that retardation of solidification by crystallization of palm oil is caused by POP and that POP is slower than PPO in solidification by crystallization is described in *Yushi,* Vol. 45, No. 6, pp. 43-44 (1992) and J. Am. *Oil* Chem. Soc., Vol. 62, No. 2, p. 409 (1985).

Oil's dripping from a fried food taken out of frying oil not only reduces the weight of the fried food or the yield of the fried product but makes the working environment dirty. Therefore, in order to solve the dripping problem associated with the use of palm oil as frying oil, a hydrogenation process has been introduced.

While hydrogenation of oil brings about improved oxidation stability and an increased rate of solidification, leading to an improved non-dripping property, a problem of taste arises. That is, hydrogenation adds a smell peculiar to hydrogenated oil. Another problem is that hydrogenation produces trans-fatty acids, which do not exist in natural vegetable oils and have been a subject of argument for their participation in cholesterol metabolism. Therefore, existence of trans-fatty acids is not preferred. The smell of hydrogenation is generated as follows. Upon hydrogenation, the double bond of the unsaturated fatty acids shifts to provide peroxide lipids, and unsaturated aldehydes are then produced. The smell is attributed to 6-nonenal and the like.

JP-A-2-219581 (the term "JP-A" as used herein means an "unexamined published Japanese patent application") and JP-A-55-110195 disclose a method comprising ester exchange of palm oil to reduce the content of a symmetric disaturated monooleic triglyceride to 10% or less. However, the method of JP-A-2-219581 employs 1,3-position-specific lipase for ester exchange, failing to reduce the PPO/POP ratio to 0.5 or higher, and the resultant fat and oil, when used as frying oil, does not have a non-dripping property. The method disclosed in JP-A-55-110195 aims at the manufacture of plastic fat and oil while preventing formation of gigantic crystals, having no mention of non-dripping properties. In addition, since the compounding ratio of palm oil as specified in the publication is as low as 30% at the most, the method hardly provides fat and oil having oxidation stability suitable for use as frying oil.

While ester exchange may be carried out at random by using a chemical catalyst, this process needs a step of catalyst removal, involving waste management for the catalyst. In addition, the oil as obtained is colored and should be decolored.

### SUMMARY OF THE INVENTION

An object of the present invention is to provide frying fat and oil which is highly stable, exhibits a non-dripping property, and tastes satisfactorily (i.e., the essential taste of which is not ruined due to, for example, a peculiar smell generated on hydrogenation).

Another object of the present invention is to eliminate the poor non-dripping property of palm oil when used as frying oil while retaining the favorable characteristics of palm oil for use as frying oil, i.e., high oxidation stability and a plain taste.

These and other objects of the present invention have been accomplished by a palm oil with a solid fat content falling within a range that is appropriate for retaining the high stability against oxidation and a plain taste. The inventors of the present invention have extensively studied with the above purpose in mind and, as a result, have found that the objects can be achieved by enzymatic ester exchange of fat and oil having a controlled fatty acid composition using lipase having no positional specificity. The present invention has been completed based on this finding.

That is, the present invention provides frying fat and oil comprising a fat and oil composition derived from a palm-based oil or from a mixture of a palm-based oil and a liquid vegetable oil. It comprises 25 to 48% by weight of saturated fatty acid residues and 40 to 60% by weight of monounsaturated fatty acid residues based on the total fatty acid residue content of the composition. The total dipalmitoyl-monooleoyl glycerides of the fat and oil composition has a PPO/POP ratio of not less than 0.5, wherein PPO represents a triglyceride having palmitic acid at the 1,2-positions (or 2,3-positions) and oleic acid at the 3-position (or 1-position), and POP represents a triglyceride having palmitic acid at the 1,3-positions and oleic acid at the 2-position.

### BRIEF DESCRIPTION OF THE DRAWINGS

Fig. 1 is a graph showing the rate of solidification by crystallization of the frying fat and oil of Example 1 and Comparative Examples 1 and 2.
Fig. 2 is a graph showing the rate of solidification by crystallization of the frying fat and oil of Example 2 and Comparative Examples 3 and 4.

### DETAILED DESCRIPTION OF THE INVENTION

The POP/PPO ratio is to specify the configuration of the positions of a palmitic acid residue and an oleic acid residue on triglycerides. Palm oil contains 32 to 59% of palmitic acid and 27 to 52% of oleic acid as the main fatty acid residues and comprises 25 to 35% of POP and 15 to 25% of POO (triglyceride having palmitic acid at the 1-position (or 3-position) and oleic acid at the 2,3-positions (or 1,2-position)) as main triglycerides. When mixed with vegetable oil, the main triglycerides would be POO, POP, and OOO (triglyceride having oleic acid at the 1,2,3-positions). Since POO and OOO have little influence on retardation of solidification by crystallization, only those triglycerides having two palmitic acid residues and one oleic acid residue are specified in the present invention.

The palm-based oil for use in the invention includes not only palm oil *per se* but fractionated oils thereof, such as DF (double fractionated) olein, palm olein and palm stearin. The palm-based oil can be used either alone or, preferably, in combination with a liquid vegetable oil.

The liquid vegetable oil to be mixed with a palm-based oil is not particularly limited, provided that it achieves the specific fatty acid composition according to the invention in a mixture with a palm-based oil. From the viewpoint of the stability required for use as frying oil, those having a low polyunsaturated fatty acid content, such as rape seed oil, soybean oil, corn oil, high-oleic safflower oil, and high-oleic sunflower oil, are preferred.

In the present invention, the fatty acid components have a composition of 25 to 48% by weight of saturated fatty acids and 40 to 60% by weight of monounsaturated fatty acids. Such a fatty acid composition is achieved usually by mixing a palm-based oil and a liquid vegetable oil. If the saturated fatty acids content is less than 25% or if the monounsaturated fatty acids content is more than 60%, the proportion of the palm-based oil in the mixed oil is limited so that the high stability characteristic of the palm-based oil cannot be made full advantage of. If the saturated fatty acids content is more than 48% or if the monounsaturated fatty acids content is less than 40%, fried foods prepared by using the resulting fat and oil are less palatable due to poor melting of the oil in the mouth.

More specifically, the above-specified fatty acid composition can be achieved by, for example, mixing palm oil with rape seed oil or high-oleic safflower oil at a ratio of 5:5 to 10:0 by weight or by mixing DF olein and rape seed oil or high-oleic safflower oil at a ratio of 6:4 to 10:0 by weight.

A preferred fatty acid composition comprises 30 to 40% by weight of saturated fatty acids and 44 to 54% by weight of monounsaturated fatty acids. That is, in a preferred embodiment of the invention, the frying fat and oil comprises a fat and oil composition derived from a palm-based oil or a mixture of a palm-based oil and a liquid vegetable oil, which comprises 30 to 40% by weight of saturated fatty acid residues and 44 to 54% by weight of monounsaturated fatty acid residues based on the total fatty acid residue content, the total dipalmitoyl-monooleoyl glycerides of which have a PPO/POP ratio of not less than 0.5.

More specifically, the above preferred fatty acid composition can be achieved by, for example, mixing palm oil with rape seed oil or high-oleic safflower oil at a ratio of 7:3 to 8:2 by weight or by mixing DF olein and rape seed oil or high-oleic safflower oil at a ratio of 7:3 to 10:0 by weight.

In order to improve the non-dripping property, it is essentially required that the PPO/POP ratio of dipalmitoyl-monooleoyl glycerides be not less than 0.5, provided that pure PPO is excluded.

The frying fat and oil according to the invention can be obtained by preparing a fat and oil composition having the above-specified fatty acid composition using a palm-based oil either alone or in combination with a liquid vegetable oil and subjecting the fat and oil composition to ester exchange to make the PPO/POP ratio 0.5 or higher.

Ester exchange is carried out by using lipase. Lipase species are divided into those having positional specificity and those not. The terminology "positional specificity" means the ability to recognize the positions of ester linkages in a substrate molecule and to react with one thereof specifically. Known lipases having positional specificity are 1,3-position-specific lipase which reacts with sn-1 and sn-3 position-fatty acid groups and 2-position-specific lipase which reacts with only sn-2 position fatty acid group. However, practical 2-position-specific lipase which can be used in ester exchange is not known. Since the 1,3-position-specific lipase cannot make the PPO/POP ratio 0.5 or higher, the retarded solidification by crystallization cannot be improved, and thus it is difficult to obtain an improved non-dripping property. Accordingly, lipase which can make the PPO/POP ratio 0.5 or higher other than 1,3-position-specific lipase, substantially lipase having no positional specificity, is used in the present invention. Lipase species having no positional specificity are selected from commercially available ones, and include lipase of *Candida cylindracea* origin (trade name "Lipase OF", produced by The Meito Sangyo Co., Ltd.), lipase of *Chromobacterium viscosum* origin, and lipase of *Alcaligenes* sp. origin (trade name "Lipase QL", "Lipase QLC", produced by The Meito Sangyo Co., Ltd.). These enzymes may be in a powder form, but are preferably immobilized on a carrier, such as diatomaceous earth or an ion-exchange resin.

While the ester exchange reaction can be carried out either in a batch system or a continuous system, a continuous system using a column packed with immobilized lipase is preferred; this is true because by-production of free fatty acids resulting from hydrolysis as a side reaction becomes appreciable in a batch-wise reaction.

It is a generally followed technique in the chemical industry of fat and oil that fat and oil having a solid fat content of 10 to 30% is completely melted at 10 to 30°C and then quenched (and if desired, followed by tempering) to provide flowability (see Bailey's Industrial Oil and Fat Products, Vol.3, pp. 86-105, edited by Thomas H. Applewhite, published by JOHN WILEY & SONS). This technique can be applied to the fat and oil composition having the specific fatty acid composition of the present invention. That is, the fat and oil obtained by ester exchange and having a fatty acid composition comprising 30 to 40% by weight of saturated fatty acids and 44 to 54% by weight of monounsaturated fatty acids is completely melted at a temperature above the melting point of the fat and oil and then quenched at a cooling rate of at least 20°C/min to precipitate uniform crystals, which are then, if desired, subjected to tempering. There is thus obtained flowable oil easy to handle.

That is, in another preferred embodiment, the present invention provides frying fat and oil having improved flowability which is obtained by completely melting a fat and oil composition derived from a palm-based oil or a mixture of a palm-based oil and a liquid vegetable oil, followed by quenching to precipitate uniform crystals, and, if desired, further followed by tempering, the fat and oil composition comprising 30 to 40% by weight of saturated fatty acid residues and 44 to 54% by weight of monounsaturated fatty acid residues based on the total fatty acid residue content, and the total dipalmitoyl-monooleoyl glycerides of the fat and oil composition having a PPO/POP ratio of not less than 0.5.

The present invention thus provides frying fat and oil which has high stability, a non-dripping property, and has a good taste. The palm oil-based frying oil of the invention exhibits an improved non-dripping property while retaining the favorable characteristic of high oxidation stability possessed by a palm-based oil and maintaining the plain taste essential to a palm-based oil without suffering from impairment of its taste which would have been encountered in using hydrogenated fat and oil due to the peculiar smell of hydrogenation.

The present invention will now be illustrated in greater detail with reference to Examples. Unless otherwise indicated, all the percents and ratios are by weight.

### EXAMPLE 1

Immobilized position-nonspecific lipase of *Alcaligenes* sp. origin (Lipase QLC, produced by The Meito Sangyo Co., Ltd.) was put in a column kept at 45°C, and a 3:1 mixture of palm oil and rape seed oil was fed therethrough at a space velocity (SV) of 1.0 to conduct ester exchange. The ester-exchanged oil was purified by deodorizing.

### COMPARATIVE EXAMPLE 1

Ester exchange was carried out in the same manner as in Example 1, except for using immobilized 1,3-position-specific lipase of *Rhizopus delemar* origin (Lipase D, produced by Amano Pharmaceutical Co., Ltd.). The ester-exchanged oil was purified by deodorizing.

### COMPARATIVE EXAMPLE 2

A 3:1 mixture of palm oil and rape seed oil was purified by deodorizing.

The fatty acid compositions of the palm oil/rape seed oil mixture used in Example 1 and Comparative Examples 1 and 2 are shown in Table 1 below, and the PPO content, POP content, and PPO/POP ratio of the resulting oils are shown in Table 2 below.

**TABLE 1**

| Fatty Acid Composition (%) | | | | | |
|---|---|---|---|---|---|
| C16 | C18 | C18:1 | C18:2 | C18:3 | Others |
| 32.7 | 4.5 | 44.9 | 12.6 | 2.9 | 2.2 |

**TABLE 2**

| | Example 1 | Comparative Example 1 | Comparative Example 2 |
|---|---|---|---|
| PPO (%) | 9.3 | 5.8 | 2.9 |
| POP (%) | 15.3 | 14.9 | 23.8 |
| PPO/POP | 0.60 | 0.39 | 0.12 |

### EXAMPLE 2

Immobilized lipase of *Alcaligenes* sp. origin (Lipase QLC) was put in a column kept at 40°C, and a 3:1 mixture of DF olein and rape seed oil was fed therethrough at an SV of 1.0 to conduct ester exchange. The ester-exchanged oil was purified by deodorizing.

### COMPARATIVE EXAMPLE 3

Ester exchange was carried out in the same manner as in Example 2, except for using immobilized 1,3-position-specific lipase of *Mucor miehei* origin (Lipozyme IM60, produced by Novo Nordisk). The ester-exchanged oil was purified by deodorizing.

### COMPARATIVE EXAMPLE 4

A 3:1 mixture of DF olein and rape seed oil was purified by deodorizing.

The fatty acid compositions of the oil mixture used in Example 2 and Comparative Examples 3 and 4 are shown in Table 3 below, and the PPO content, POP content, and PPO/POP ratio of the resulting oils are shown in Table 4 below.

**TABLE 3**

| Fatty Acid Composition (%) | | | | | |
|---|---|---|---|---|---|
| C16 | C18 | C18:1 | C18:2 | C18:3 | Others |
| 28.3 | 3.5 | 47.4 | 15.6 | 3.3 | 1.6 |

**TABLE 4**

| | Example 2 | Comparative Example 3 | Comparative Example 4 |
|---|---|---|---|
| PPO (%) | 10.5 | 1.0 | 1.9 |
| POP (%) | 5.3 | 13.9 | 17.3 |
| PPO/POP | 1.98 | 0.07 | 0.11 |

### COMPARATIVE EXAMPLE 5

Fat and oil obtained by hydrogenation of a 5:5 mixture of palm oil and corn oil was used. The hydrogenated fat and oil had a saturated fatty acid residue content of 35.2% and a monounsaturated fatty acid residue content of 53.9% based on the total fatty acid residue content.

### COMPARATIVE EXAMPLE 6

Immobilized lipase of *Alcaligenes* sp. origin (Lipase QLC) was put in a column kept at 40°C, and a 6:4 mixture of DF olein and high-oleic safflower oil was fed therethrough at an SV of 1.0 to conduct ester exchange. The ester-exchanged oil was purified by deodorizing. The fatty acid composition of the substrate oil is shown in Table 5 below.

**TABLE 5**

| Fatty Acid Composition (%) | | | | | |
|---|---|---|---|---|---|
| C16 | C18 | C18:1 | C18:2 | C18:3 | Others |
| 23.6 | 3.3 | 57.4 | 13.9 | 0.6 | 1.2 |

### TEST EXAMPLE 1

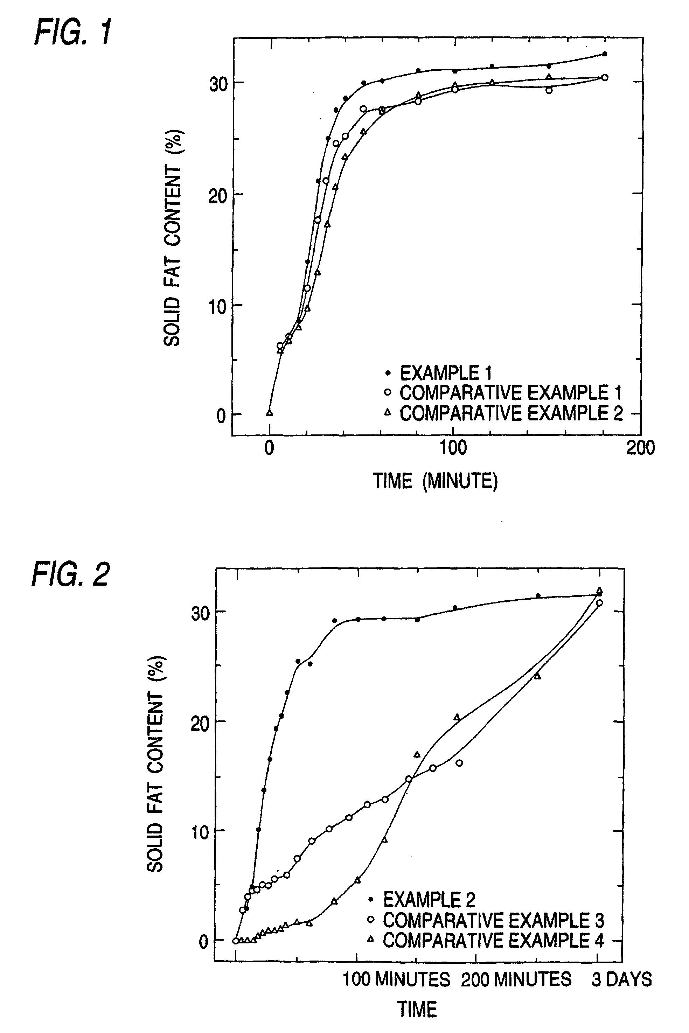

The rate of solidification by crystallization of the oil of Examples 1 and 2 and Comparative Examples 1 to 4 was measured as follows. The results obtained are shown in Figs. 1 and 2.

The oil was put in a tube for SFC measurement and maintained at 80°C for 10 minutes to completely melt. The tube was placed in an aluminum block at 10°C or 5°C, and the solid fat content was measured over time by means of pulse NMR.

As is apparent from Figs. 1 and 2, the rate of solidification by crystallization is increased by ester exchange. The degree of increase in solidification rate is higher with the ester-exchanged oil obtained by using a position-nonspecific enzyme than with that obtained by using a position-specific one.

### EXAMPLE 3

In 20 ml of distilled water was suspended 0.4 g of position-nonspecific lipase of *Candida cylindracea* origin (Lipase OF, produced by The Meito Sangyo Co., Ltd.). Ten grams of a ceramic carrier (SM-10, produced by NGK Insulators, Ltd.) were added to the suspension. After stirring, the suspension was allowed to stand overnight, washed with water, and freeze-dried to prepare an immobilized lipase preparation. The lipase preparation was put in a column kept at 45°C, and ester exchange was carried out in the same manner as in Example 1. The resulting oil was deodorized.

### TEST EXAMPLE 2

Yeast dough of doughnuts was deep-fried in the oils of Examples 1 and 3 and Comparative Examples 1, 2, and 5. The doughnuts were placed on filter paper immediately after being taken out of the oil. After the doughnuts were allowed to stand on the filter paper for 1 hour, the amount of oil which oozed out of the doughnuts and absorbed in the filter paper was observed and rated on the following basis:
Very little = A;
Little = B;
Much = C;
Very much = D.
Further, the oiliness of the doughnuts to the taste was evaluated by a sensory testing panel of 10 experts and rated on the following basis:
Not oily = A;
Oily = B;
Very oily = C.
The results of the sensory evaluation were averaged.

The results obtained are shown in Table 6 below.

**TABLE 6**

| | Oozing of Oil | Taste |
|---|---|---|
| Example 1 | A | A |
| Example 3 | A | A |
| Comparative Example 1 | C | A |
| Comparative Example 2 | C | A |
| Comparative Example 5 | B | C |

### TEST EXAMPLE 3

A ladle-ful amount (about 80 g) of chopped vegetables mixed with batter was deep-fried in oil of Example 2 or Comparative Example 3 or 4 heated at 170°C for 2 minutes for one side and then for 1 minute for the other side. The fried food was allowed to cool on a colander till the surface temperature dropped to about 50°C, and then it was transferred onto filter paper placed on a tray and stored at 5°C overnight. Thereafter, the tray and the filter paper were weighed to obtain the amount of oil which oozed out of the fried food.

The fried food after storage was warmed in the microwave, and its oiliness to taste and palatability was evaluated by a sensory testing panel of 10 experts. The oiliness was rated on the same basis as in Test Example 2. The palatability was rated on the following basis:
Very satisfactory = A;
Satisfactory = B;
Poor = C;
Very poor = D.
The results, as averaged, are shown in Table 7 below.

**TABLE 7**

| | Amount (g) of Oil Oozed out per 100 g of Fried Food | Sensory Evaluation | |
|---|---|---|---|
| | | Oiliness | Palatability |
| Example 2 | 0.361 | A | A |
| Comparative Example 3 | 0.732 | A | D |
| Comparative Example 4 | 0.921 | A | D |

### TEST EXAMPLE 4

A hundred grams of the oil of Example 2 or Comparative Examples 3, 4 or 6 were put in a bottle of mayonnaise and kept at 80°C for 10 minutes to completely melt, followed by cooling to 5°C at a cooling rate of -20°C/min, at which time it was stored overnight. Then, the bottle was placed in an incubator at 25°C to prepare a flowable fat and oil. Separately, the oil of Example 2, after completely melting, was gradually cooled and kept at 25°C. The flowability of each oil was observed over time for 3 months and rated on the following basis:
Flowable with the solid component uniformly dispersed = A;
Slight solid/liquid separation = B;
Complete solid/liquid separation = C.
The results are shown in Table 8 below.

**TABLE 8**

| | 1 Week | 2 Weeks | 1 Month | 3 Months |
|---|---|---|---|---|
| Example 2 | A | A | A | A |
| Comparative Example 3 | A | B | C | C |
| Comparative Example 4 | C | C | C | C |
| Comparative Example 6 | B | C | C | C |
| Example 2 (no quenching) | C | C | C | C |

## Claims

1. Frying fat and oil comprising a fat and oil composition derived from a palm-based oil or from a mixture of a palm-based oil and a liquid vegetable oil,
said fat and oil composition comprising 25 to 48% by weight of saturated fatty acid residues and 40 to 60% by weight of monounsaturated fatty acid residues based on the total fatty acid residue content, and
the total dipalmitoyl-monooleoyl glycerides of said fat and oil composition having a PPO/POP ratio of not less than 0.5, wherein PPO represents a triglyceride having palmitic acid at the 1,2-positions (or 2,3-positions) and oleic acid at the 3-position (or 1-position), and POP represents a triglyceride having palmitic acid at the 1,3-positions and oleic acid at the 2-position.

2. The frying fat and oil as claimed in claim 1, wherein said fat and oil composition is obtained by ester exchange using lipase having no positional specificity.

3. The frying fat and oil as claimed in claim 1, wherein said lipase having no positional specificity is selected from the group consisting of lipase of *Candida cylindracea* origin, lipase of *Chromobacterium viscosum* origin, and lipase of *Alcaligenes* sp. origin.

4. The frying fat and oil as claimed in claim 1, wherein said fat and oil composition comprises 30 to 40% by weight of saturated fatty acid residues and 44 to 54% by weight of monounsaturated fatty acid residues based on the total fatty acid residue content.

5. The frying fat and oil as claimed in claim 1, wherein said fat and oil composition is prepared by mixing palm oil with either rape seed oil or high-oleic safflower oil at a ratio of 5:5 to 10:0 by weight.

6. The frying fat and oil as claimed in claim 1, wherein said fat and oil composition is prepared by mixing DF olein with either rape seed oil or high oleic safflower oil at a ratio of 6:4 to 10:0 by weight.

7. The frying fat and oil as claimed in claim 1, wherein said fat and oil composition is derived from a palm-based oil solely.

8. The frying fat and oil as claimed in claim 1, wherein said fat and oil composition is derived from a mixture of a palm-based oil and a liquid vegetable oil.

9. The frying fat and oil as claimed in claim 4, wherein said fat and oil composition is prepared by mixing palm oil with either rape seed oil or high-oleic safflower oil at a ratio of 7:3 to 8:2 by weight.

10. The frying fat and oil as claimed in claim 4, wherein said fat and oil composition is prepared by mixing DF olein with either rape seed oil or high oleic safflower oil at a ratio of 7:3 to 10:0 by weight.

11. The frying fat and oil as claimed in claim 4, wherein said fat and oil composition is derived from a palm-based oil solely.

12. The frying fat and oil as claimed in claim 4, wherein said fat and oil composition is derived from a mixture of a palm-based oil and a liquid vegetable oil.

13. Frying fat and oil having improved flowability prepared by completely melting the fat and oil composition as claimed in claim 4, followed by quenching.

14. The frying fat and oil as claimed in claim 13, wherein said quenching is followed by tempering.

15. A process for producing frying fat and oil, which comprises the following steps:
preparing a fat and oil composition comprising 25 to 48% by weight of saturated fatty acid residues and 40 to 60% by weight of monounsaturated fatty acid residues based on the total fatty acid residue content using a palm-based oil either alone or in combination with a liquid vegetable oil, and
subjecting the prepared fat and oil composition to ester exchange so that the total dipalmitoyl-monooleoyl glycerides of said fat and oil composition has a PPO/POP ratio of not less than 0.5, wherein PPO represents a triglyceride having palmitic acid at the 1,2-positions (or 2,3-positions) and oleic acid at the 3-position (or 1-position), and POP represents a triglyceride having palmitic acid at the 1,3-positions and oleic acid at the 2-position.

16. The process as claimed in claim 15, wherein said ester exchange is carried out by using lipase having no positional specificity.

17. The process as claimed in claim 16, wherein said lipase having no positional specificity is selected from the group consisting of lipase of *Candida cylindracea* origin, lipase of *Chromobacterium viscosum* origin, and lipase of *Alcaligenes* sp. origin.

## Patentansprüche

1. Brat/Fritier-Fett und -Öl, das eine Fett- und Ölzusammensetzung umfaßt, die von einem Palmbasierten Öl oder von einer Mischung aus einem Palmbasierten Öl und einem flüssigen Gemüseöl abgeleitet ist,
wobei die Fett- und Ölzusammensetzung 25 bis 48 Gew.-% gesättigter Fettsäurereste und 40 bis 60 Gew.-% einfach ungesättigter Fettsäurereste basierend auf dem Gesamtfettsäurerestgehalt umfaßt, und
die gesamten Dipalmitoyl-Monooleoyl-Glyceride der Fett- und Ölzusammensetzung ein PPO/POP-Verhältnis von nicht weniger als 0,5 haben, wobei PPO ein Triglycerid mit Palmitinsäure an den 1,2-Positionen (oder 2,3-Positionen) und Ölsäure an der 3-Position (oder 1-Position) darstellt und POP ein Triglycerid mit Palmitinsäure an den 1,3-Positionen und Ölsäure an der 2-Position darstellt.

2. Das Brat/Fritier-Fett und -Öl nach Anspruch 1, wobei die Fett- und Ölzusammensetzung durch einen Esteraustausch unter Verwendung von Lipase mit keiner positionellen Spezifität erhalten wird.

3. Das Brat/Fritier-Fett und -Öl nach Anspruch 2, wobei die Lipase mit keiner positionellen Spezifität ausgewählt ist aus der Gruppe, bestehend aus Lipase abstammend von Candida cylindracea, Lipase abstammend von *Chromobacterium viscosum* und Lipase abstammend von *Alcaligenes* sp.

4. Das Brat/Fritier-Fett und -Öl nach Anspruch 1, wobei die Fett- und Ölzusammensetzung 30 bis 40 Gew.-% gesättigter Fettsäurereste und 44 bis 54 Gew.-% einfach ungesättigter Fettsäurereste basierend auf dem Gesamtfettsäurerestgehalt umfaßt.

5. Das Brat/Fritier-Fett und -Öl nach Anspruch 1, wobei die Fett- und Ölzusammensetzung hergestellt wird durch Vermischen von Palmöl mit entweder Rapssaatöl oder Distelöl mit hohem Ölsäuregehalt in einem Verhältnis von 5:5 bis zu 10:0 nach Gewicht.

6. Das Brat/Fritier-Fett und -Öl nach Anspruch 1, wobei die Fett- und Ölzusammensetzung hergestellt wird durch Vermischen von DF-Olein mit entweder Rapssaatöl oder Distelöl mit hohem Ölsäuregehalt in einem Verhältnis von 6:4 bis zu 10:0 nach Gewicht.

7. Das Brat/Fritier-Fett und -Öl nach Anspruch 1, wobei die Fett- und Ölzusammensetzung abgeleitet ist von lediglich Palm-basierendem Öl.

8. Das Brat/Fritier-Fett und -Öl nach Anspruch 1, wobei die Fett- und Ölzusammensetzung von einer Mischung aus Palm-basiertem Öl und flüssigem Gemüseöl abgeleitet ist.

9. Das Brat/Fritier-Fett und -Öl nach Anspruch 4, wobei die Fett- und Ölzusammensetzung hergestellt wird durch Mischen von Palmöl mit entweder Rapssaatöl oder Distelöl mit hohem Ölsäuregehalt in einem Verhältnis von 7:3 bis 8:2 nach Gewicht.

10. Das Brat/Fritier-Fett und -Öl nach Anspruch 4, wobei die Fett- und Ölzusammensetzung hergestellt wird durch Vermischen von DF-Olein mit entweder Rapssaatöl oder Distelöl mit hohem Ölsäuregehalt in einem Verhältnis von 7:3 bis 10:0 nach Gewicht.

11. Das Brat/Fritier-Fett und -Öl nach Anspruch 4, wobei die Fett- und Ölzusammensetzung abgeleitet ist von lediglich Palm-basierendem Öl.

12. Das Brat/Fritier-Fett und -Öl nach Anspruch 4, wobei die Fett- und Ölzusammensetzung abgeleitet ist aus einer Mischung aus Palm-basierendem Öl und flüssigem Gemüseöl.

13. Brat/Fritier-Fett und -Öl mit verbesserter Fließbarkeit, hergestellt durch vollständiges Schmelzen der Fett- und Ölzusammensetzung nach Anspruch 4, gefolgt durch Quenchen.

14. Das Brat/Fritier-Fett und -Öl nach Anspruch 13, wobei sich an das Quenchen Tempern anschließt.

15. Ein Verfahren zum Herstellen von Brat/Fritier-Fett und -Öl, welches die folgenden Schritte umfaßt:
Herstellen einer Fett- und Ölzusammensetzung, die 25 bis 48 Gew.-% gesättigter Fettsäurereste und 40 bis 60 Gew.-% einfach ungesättigter Fettsäurereste basierend auf dem Gesamtfettsäurerestgehalt umfaßt, unter Verwendung von Palm-basierendem Ö1 entweder allein oder in Kombination mit einem flüssigen Gemüseöl, und
Aussetzen der hergestellten Fett- und Ölzusammensetzung einem Esteraustausch, so daß die gesamten Dipalmitoyl-Monooleoyl-Glyceride der Fettund Ölzusammensetzung ein PPO/POP-Verhältnis von nicht weniger als 0,5 haben, wobei PPO ein Triglycerid mit Palmitinsäure an den 1,2-Positionen (oder 2,3-Positionen) und Ölsäure an der 3-Position (oder 1-Position) darstellt und POP ein Triglycerid mit Palmitinsäure an den 1,3-Positionen und Ölsäure an der 2-Position darstellt.

16. Das Verfahren nach Anspruch 15, wobei der Esteraustausch unter Verwendung von Lipase mit keiner positionellen Spezifität durchgeführt wird.

17. Das Verfahren nach Anspruch 16, wobei die Lipase mit keiner positionellen Spezifität ausgewählt ist aus der Gruppe, bestehend aus Lipase abstammend von *Candida cylindracea,* Lipase abstammend von *Chromobacterium viscosum* und Lipase abstammend von *Alcaligenes* sp.

## Revendications

1. Matière grasse et huile de friture comprenant une composition de matière grasse et d'huile dérivée d'une huile à base de palme ou d'un mélange d'une huile à base de palme et d'une huile végétale liquide,
ladite composition de matière grasse et d'huile comprenant de 25 % à 48 % en poids de résidus d'acides gras saturés et de 40 à 60 % en poids de résidus d'acides gras mono-insaturés sur la base de la teneur totale en résidus d'acides, et
la totalité des glycérides de dipalmitoyle-monooléoyle de ladite composition de matière grasse et d'huile ayant un ratio PPO/POP qui n'est pas inférieur à 0,5, dans lequel PPO représente un triglycéride ayant un acide palmitique sur les positions 1 et 2 (ou sur les positions 2 et 3) et un acide oléique sur la position 3 (ou sur la position 1) et POP représente un triglycéride ayant un acide palmitique sur les positions 1 et 3 et un acide oléique sur la position 2.

2. Matière grasse et huile de friture selon la revendication 1, dans laquelle on obtient ladite composition de matière grasse et d'huile par échange d'esters utilisant une lipase n'ayant aucune spécificité de position.

3. Matière grasse et huile de friture selon la revendication 1, dans laquelle ladite lipase n'ayant aucune spécificité de position est choisie dans le groupe constitué de la lipase d'origine de *Candida cylindracea,* de la lipase d'origine de *Chromobacterium viscosum* et de la lipase d'origine de l'espèce *Alcaligenes*.

4. Matière grasse et huile de friture selon la revendication 1, dans laquelle ladite composition de matière grasse et d'huile comprend de 30 à 40 % en poids de résidus d'acides gras saturés et de 44 à 54 % en poids de résidus d'acides gras mono-insaturés sur la base de la teneur totale en résidus gras.

5. Matière grasse et huile de friture selon la revendication 1, dans laquelle on prépare ladite composition de matière grasse et d'huile en mélangeant de l'huile de palme soit avec de l'huile de colza soit avec de l'huile de carthame hautement oléique à un ratio compris entre 5:5 et 10:0 en poids.

6. Matière grasse et huile de friture selon la revendication 1, dans laquelle on prépare ladite composition de matière grasse et d'huile en mélangeant de l'oléine DF soit avec de l'huile de colza soit avec de l'huile de carthame hautement oléique à un ratio compris entre 6:4 et 10:0 en poids.

7. Matière grasse et huile de friture selon la revendication 1, dans laquelle ladite composition de matière grasse et d'huile est dérivée d'une huile à base de palme uniquement.

8. Matière grasse et huile de friture selon la revendication 1, dans laquelle ladite composition de matière grasse et d'huile est dérivée d'un mélange d'une huile à base de palme et d'une huile végétale liquide.

9. Matière grasse et huile de friture selon la revendication 4, dans laquelle on prépare ladite composition de matière grasse et d'huile en mélangeant de l'huile de palme soit avec de l'huile de colza soit avec de l'huile de carthame hautement oléique à un ratio compris entre 7:3 et 8:2 en poids.

10. Matière grasse et huile de friture selon la revendication 4, dans laquelle on prépare ladite composition de matière grasse et d'huile en mélangeant de l'oléine DF soit avec de l'huile de colza soit avec de l'huile de carthame hautement oléique à un ratio compris entre 7:3 et 10:0 en poids.

11. Matière grasse et huile de friture selon la revendication 4, dans laquelle ladite composition de matière grasse et d'huile est dérivée d'une huile à base de palme uniquement.

12. Matière grasse et huile de friture selon la revendication 4, dans laquelle ladite composition de matière grasse et d'huile est dérivée d'un mélange d'une huile à base de palme et d'une huile végétale liquide.

13. Matière grasse et huile de friture ayant une fluidité améliorée préparée en faisant fondre complètement la composition de matière grasse et d'huile selon la revendication 4 et en la soumettant ensuite à une trempe.

14. Matière grasse et huile de friture selon la revendication 13, dans laquelle ladite trempe est suivie d'un revenu.

15. Procédé pour produire de la matière grasse et friture, qui comprend les étapes suivantes consistant à :
préparer une composition de matière grasse et d'huile comprenant de 25 à 48% en poids de résidus d'acides gras saturés et de 40 à 60 % en poids de résidus d'acides gras mono-insaturés sur la base de la teneur totale en résidus d'acides gras en utilisant une huile à base de palme soit seule soit en association avec une huile végétale liquide, et
soumettre la composition préparée de matière grasse et d'huile à un échange d'esters de façon à ce que la totalité des glycérides de dipalmitoyle-monooléoyle de ladite composition de matière grasse et d'huile ait un ratio PPO/POP qui n'est pas inférieur à 0,5, dans lequel PPO représente un triglycéride ayant un acide palmitique sur les positions 1 et 2 (ou sur les positions 2 et 3) et un acide oléique sur la position 3 (ou sur la position 1) et POP représente un triglycéride ayant un acide palmitique sur les positions 1 et 3 et un acide oléique sur la position 2.

16. Procédé selon la revendication 15, dans lequel on effectue ledit échange d'esters en utilisant une lipase n'ayant aucune spécificité de position.

17. Procédé selon la revendication 16, dans lequel ladite lipase n'ayant aucune spécificité de position est choisie dans le groupe constititué de la lipase d'origine de *Candida cylindracea*, de la lipase d'origine de *Chromobacterium viscosum* et de la lipase d'origine de l'espèce *Alcaligenes*.
